# FASCICULE DE BREVET EUROPEEN

(11) **EP 0 619 360 B1**
(45) Date de publication et mention de la délivrance du brevet: **10.03.1999**
(21) Numéro de dépôt: 94400669.1
(22) Date de dépôt: 29.03.1994
(51) Int. Cl.: C09K 19/54, G02F 1/1333

(54) **Matériau électrooptique à base de cristal liquide dispersé dans un polymère, procédé d'élaboration par modification chimique de l'interface et dispositif à base de ce matériau**
Elektrooptisches Material auf Basis von polymerdispersiertem Flüssigkristall, Verfahren zur Herstellung durch chemische Modifizierung der Grenzfläche, und Vorrichtung auf Basis von diesem Material
Electrooptical material based on polymer-dispersed liquid crystal, process for manufacturing by chemical modification of the interface and device based on this material

(30) Priorité: 06.04.1993 FR 9304053
(43) Date de publication de la demande: 12.10.1994
(73) Titulaire: THOMSON-CSF, 75008 Paris (FR)
(72) Inventeur: Bouteiller, Laurent, F-92402 Courbevoie Cedex (FR); Le Barny, Pierre, F-92402 Courbevoie Cedex (FR)
(74) Mandataire: Guérin, Michel

(56) Documents cités:
- EP-A- 0 357 234
- EP-A- 0 507 204
- WO-A-91/13126
- WO-A-92/12219

## Description

L'invention concerne un matériau électrooptique et plus précisément, un matériau électrooptique à base de cristal liquide dispersé dans un polymère. Ce type de matériau est particulièrement intéressant dans le domaine des obturateurs optiques et notamment dans le domaine des écrans de visualisation.

L'effet électrooptique utilisé dans ces matériaux composites est le suivant : un film de composite est généralement compris entre deux électrodes conductrices transparentes. Au repos, ce film est diffusant à cause des différences d'indices de réfraction au sein du matériau. Lorsqu'on applique une tension aux bornes de ce film, les molécules de cristal liquide de forme oblongue, s'orientent selon leur grand axe parallèlement au champ électrique. En ajustant l'indice ordinaire du cristal liquide à l'indice du polymère, on obtient un milieu homogène en indice et le film devient transparent. On est ainsi en mesure de passer d'un état diffusant à un état transparent.

L'utilisation de ces composites cristaux liquides-polymère offre de nombreux avantages par rapport aux autres techniques de visualisation. En effet, ces composites :
- bénéficient de la facilité de mise en oeuvre des polymères, ce qui permet de les déposer facilement en couche mince d'épaisseur contrôlée sur des grandes surfaces;
- ne nécessitent pas de traitement de surface des substrats formant l'écran;
- fonctionnent sans polariseur (d'où gain de luminosité);
- présentent un effet électrooptique qui possède un angle de vue de 150°.

Les techniques existantes de mise en oeuvre de ces matériaux composites sont notamment de deux types :
- la première technique consiste à réaliser une émulsion d'un cristal liquide (insoluble dans l'eau) dans une phase aqueuse, riche en polymère (polymère hydrosoluble ou latex), puis d'évaporer l'eau pour solidifier l'émulsion;
- la deuxième technique consiste à réaliser un mélange homogène d'un cristal liquide et d'un polymère ou d'un précurseur (pouvant contenir un solvant du cristal liquide, également solvant du polymère), puis de faire démixer le cristal liquide soit en polymérisant (cas d'un précurseur), soit en refroidissant, soit encore en évaporant l'éventuel solvant.

Dans ces matériaux composites, il a été montré que les paramètres tels que la tension de commande (nécessaire au basculement des molécules de cristal liquide), le temps de réponse, le contraste, les phénomènes d'hystérésis dépendent directement
- de facteurs géométriques du composite (épaisseur du film, taille et forme des cavités remplies par le cristal liquide);
- des propriétés diélectriques du polymère (résistivité, constante diélectrique)
- des propriétés optiques du polymère (indice de réfraction);
- de la nature de l'ancrage du cristal liquide sur le polymère.

Or, toutes ces grandeurs sont partiellement ou exclusivement fonction de la nature du polymère. Ainsi pour un polymère donné on est le plus souvent amené à faire un compromis entre les différents paramètres que l'on parvient à atteindre (tension de commande, contraste, ...).

Pour disposer d'un degré de liberté supplémentaire permettant d'agir sur les performances obtenues à partir de ce type de composite dans lequel sont dispersées des molécules de cristal liquide, l'invention propose un nouveau matériau électrooptique composite. Il s'agit d'un matériau comprenant un réseau constitué par un polymère poreux (P) contenant des fonctions réactives (Y), et des molécules cristal liquide (χL) dans les pores du réseau, le réseau polymère présentant des fonctions (X), en contact avec les molécules cristal liquide. Un tel matériau permet ainsi de choisir indépendamment les fonctions (X) et (Y) pour optimiser les performances électrooptiques pouvant être obtenues.

Plus précisément, l'invention a pour objet un matériau électrooptique composite à base de polymère (P) et de molécules cristal liquide caractérisé en ce qu' il comprend un réseau poreux de polymère, les molécules cristal liquide (χL) étant dans les pores du film, le polymère possédant des fonctions chimiques (Y) et à l'interface polymère/cristal liquide, des fonctions chimiques (X).

Les fonctions (Y) peuvent être avantageusement des alcools, les fonctions (X) pouvant être avantageusement des esters.

L'invention a aussi pour objet un procédé d'élaboration de ce nouveau type de matériau électrooptique. Plus précisément, l'invention on a aussi pour objet un procédé d'élaboration d'un film de matériau électrooptique à base de polymère (P) et de particules de cristal liquide (χL) caractérisé en ce qu'il comprend les étapes suivantes :
* la réalisation d'un film poreux de polymère, sur un substrat (S), ledit polymère possédant des fonctions réactives (Y) ;
* la transformation chimique des fonctions réactives (Y) des chaînes de polymère situées à l'interface polymère (P)/pores du réseau, de manière à obtenir en volume des chaînes de polymère ayant des fonctions (Y) et en surface des chaînes de polymère ayant des fonctions (X) ;
* l'inclusion de molécules cristal liquide (χL) dans les pores du film.

Dans le procédé selon l'invention, la porosité du film peut avantageusement être assurée par des inclusions de cristal liquide (χL)ₒ dans le polymère, ledit cristal liquide (χL)ₒ pouvant être éliminé avant l'étape de transformation chimique des fonctions réactives surfaciques (Y) en fonctions (X).

Le film poreux de polymère peut avantageusement être un film de polymère réticulé assurant ainsi une grande stabilité au réseau poreux.

La transformation chimique des fonctions réactives surfaciques peut avantageusement être effectuée en phase gazeuse contenant des fonctions (Z) capables de générer des fonctions (X).

Le film poreux de polymère réticulé peut être réalisé à partir d'un mélange (M)ₒ de monomère photopolymérisable, de photoamorçeur et de cristal liquide (χL)ₒ. De préférence, le monomère photopolymérisable est polyfonctionnel pour former lors de la polymérisation un réseau de polymère réticulé, sous l'effet d'une irradiation.

Le mélange (M)ₒ peut avantageusement être introduit par capillarité dans une cellule comprenant deux électrodes transparentes, la polymérisation pouvant être amorcée par irradiation au travers d'une des électrodes.

Les molécules de cristal liquide (χL)ₒ ayant permis la formation de pores, peuvent avantageusement être éliminées par aspiration sous vide. La transformation chimique des fonctions réactives surfaciques (Y) en fonctions (X) peut ainsi être réalisée. Le nouveau réseau de polymère comprenant en volume des fonctions (Y) et en surface des fonctions (X) est alors de préférence rincé avec un solvant, avant de remplir à nouveau le film poreux par un cristal liquide (χL) pouvant être le cristal liquide (χL)ₒ.

Typiquement dans le cas d'un polymère (P) renfermant des fonctions OH, la transformation chimique peut être obtenue par réaction hétérogène avec du chlorure d'acide gazeux.

L'invention a enfin pour objet un dispositif électrooptique comprenant un film de matériau composite à base de polymère (P) et de particules de cristal liquide (χL) caractérisé en ce que :
- le film est un film poreux de polymère, les molécules cristal liquide (χL) étant dans les pores du film ;
- le polymère (P) comprend des fonctions (Y) et à l'interface polymère/cristal liquide, des fonctions (X).

Le dispositif électrooptique selon l'invention peut être notamment un écran de visualisation destiné à la projection d'images fonctionnant à la cadence vidéo ou destiné à fonctionner en vision directe.

L'invention sera mieux comprise et d'autres avantages apparaîtront à la lecture de la description qui va suivre donnée à titre non limitatif et des figures annexées parmi lesquelles :
- la figure 1 schématise un exemple de cellule comprenant le matériau électrooptique selon l'invention et pouvant être utilisé dans un dispositif électrooptique;
- la figure 2 illustre des courbes validant le procédé de réalisation d'un écran de visualisation selon l'invention et notamment l'étape de transformation chimique des fonctions réactives surfaciques (Y);
   * la figure 2a illustre le degré d'avancement d'une réaction de transformation chimique des fonctions (Y) en fonctions (X), en fonction du temps, en considérant l'ensemble des fonctions réactives (Y);
   * la figure 2b illustre le degré d'avancement de la même réaction de transformation chimique des fonctions (Y) en fonctions (X), en fonction du temps, en considérant les fonctions surfaciques (Y).

L'invention propose un composite original à base de cristal liquide dispersé dans un polymère pouvant être facilement utilisé sous forme de film. Les polymères employés présentent une modification chimique de leur interface avec les particules de cristal liquide, rendant possible l'optimisation de la nature de l'ancrage des molécules de cristal liquide sur le polymère. Cette optimisation peut ainsi être effectuée, indépendamment des propriétés volumiques du polymère et donc permet d'améliorer les tensions d'adressage, le temps de réponse et diminuer les phénomènes d'hystérésis.

Le réseau constitué par le polymère poreux peut être préparé par polymérisation (photochimique, thermique, polycondensation ...) d'un mélange de monomères dans un solvant des monomères qui soit non solvant du polymère. L'un des monomères au moins pouvant porter la fonction (Y), le solvant étant éliminé ultérieurement.

Le réseau peut aussi être préparé par polymérisation d'un mélange de monomères contenant des particules inorganiques, qui sont ensuite dissoutes sélectivement.

Le réseau peut aussi être préparé par polymérisation d'un mélange de monomères tels qu'il y ait dégagement d'un gaz lors de cette polymérisation.

Le réseau peut être compris entre deux électrodes conductrices transparentes qui peuvent être recouvertes d'une couche protectrice, pour être utilisé dans un dispositif selon l'invention.

On peut faire circuler à travers le réseau un mélange constitué par un réactif, éventuellement un solvant (solvant du réactif et non-solvant du polymère) et un catalyseur (si nécessaire) puis on peut rincer avec un non-solvant du polymère et sécher sous vide. Le réseau (dont les propriétés géométriques, diélectriques et optiques n'ont pas été modifiées) est ainsi recouvert en surface par les fonctions chimiques (X).

On peut remplir alors le réseau par un mélange de cristaux liquides (qui peut contenir des dopants tels que des colorants dichroïques).

On peut choisir des fonctions réactives (Y) et des réactifs (Z) donnant lieu à des fonctions (X) sur le polymère (P) d'une grande diversité, quelques exemples sont cités dans le tableau 1.

**Tableau 1**

| FONCTION REACTIVE Y | REACTIF Z |
|---|---|
| alcool | chlorure d'acide |
| amine | epoxy |
| alcool | chlorosilane |
| isocyanate | alcool |
| ester | amine |

Pour un type de fonctions réactives (Y) et de réactifs (Z) choisis, on peut faire varier la nature chimique des substituants présents sur (Z) de manière illimitée. De sorte que l'on peut optimiser les propriétés électrooptiques du composite. A titre d'exemple, le tableau 2 montre quelques réactifs (Z) qui peuvent être utilisés dans le cas de l'utilisation d'un chlorure d'acide.

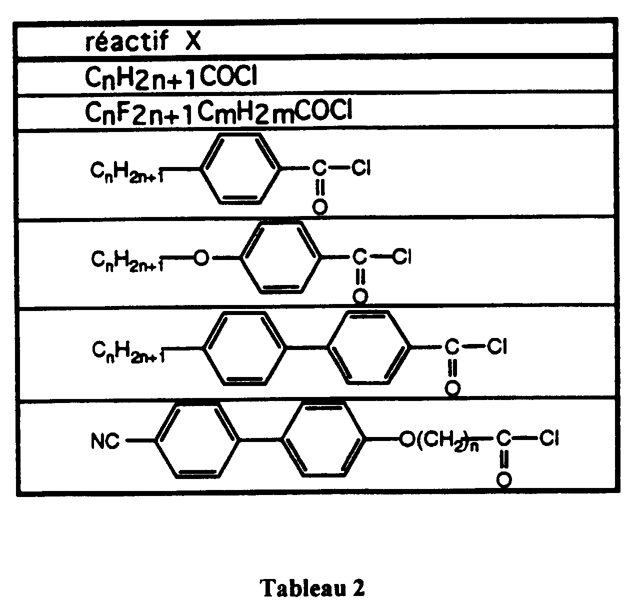

### Exemple 1

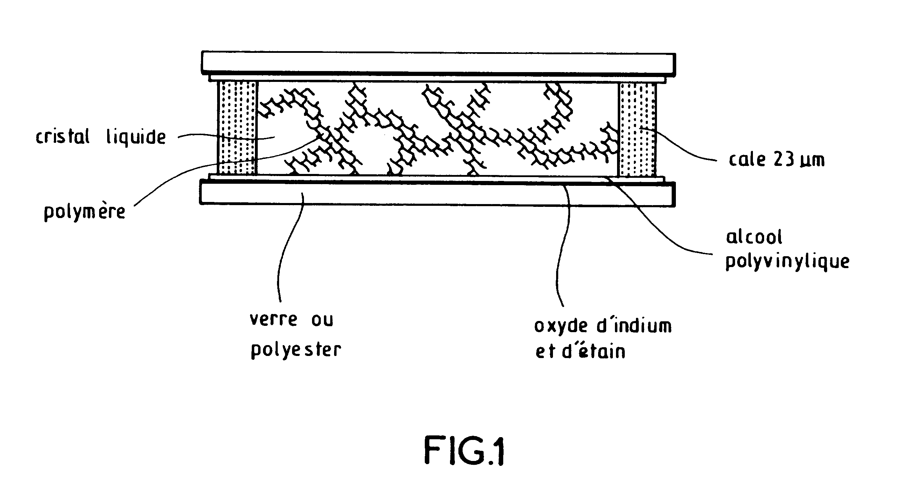

Dans une cellule (figure 1) constituée par deux substrats conducteurs transparents (verre ou polyester recouvert d'oxyde d'indium et d'étain), protégés par une couche de 0,6 µm d'alcool polyvinylique, et séparés par des cales d'épaisseur 23 µm, on introduit le mélange homogène suivant :
- 95 % du cristal liquide BL012 (Merck BDH),
- 3,9 % du mélange de monomères acryliques Kayarad HX 620 (Nippon Kayaku);
- 1 % de 2-hydroxyéthyl acrylate (Aldrich);
- 0,1 % du photoamorceur Darocure 1173 (Merck).

On irradie la cellule avec une lampe à vapeur de mercure (9 mW/cm² à 365 nm pendant 15 minutes), pour obtenir un réseau de polymère à porosités ouvertes, baigné par le cristal liquide.

Le cristal liquide est éliminé sous vide, puis la cellule est mise au contact du chlorure d'acide para-butyl benzoique (Aldrich) gazeux (sous 9 mm de mercure, à 60°C, pendant 2 heures).

Le réseau est ensuite rincé à l'éther (qui ne gonfle pas le réseau), séché sous vide pendant 3 heures et rempli à nouveau par le cristal liquide BL012.

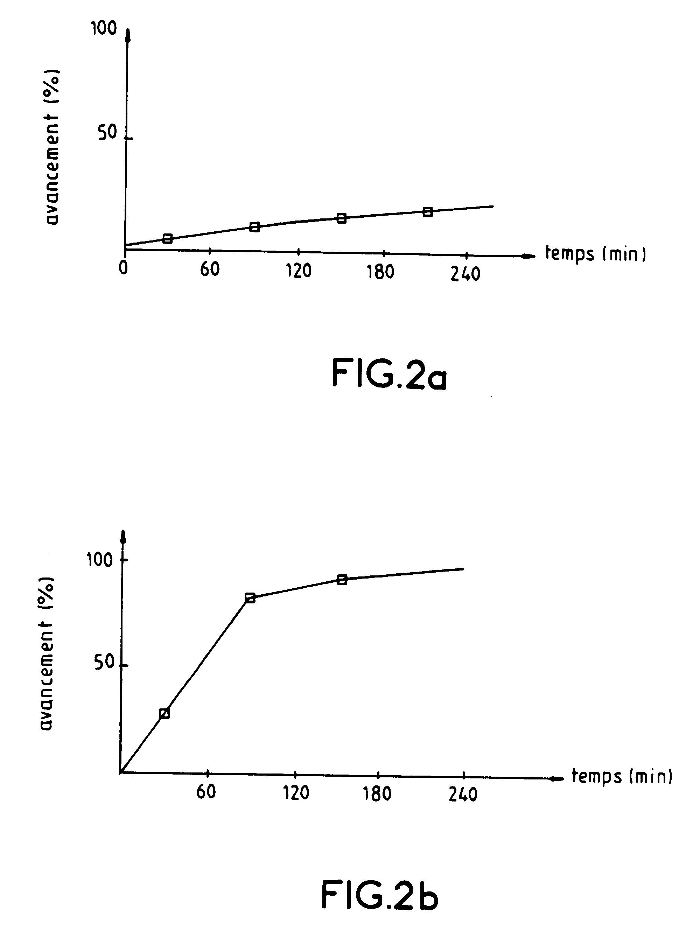

Il est possible de suivre l'avancement de cette réaction par analyse par Infra rouge à Transformée de Fourier (FTIR) qui traduit les modifications chimiques dans toute l'épaisseur d'un film de polymère : la transformation des fonctions alcool en fonction ester. Il apparaît sur la figure 2a qui traduit l'avancement de la réaction (des mesures en analyse IR ayant été effectuées sur des films de polymère mis en présence d'un gaz de chlorure d'acide durant des périodes de plus en plus longues) qu'au bout de 200 minutes, seules 20 % des fonctions OH ont réagi. Ainsi beaucoup de fonctions en volume n'ont pas été modifiées.

La seconde analyse menée sur le même film de polymère renfermant des fonctions OH, sur lequel on dispose une goutte de glycérol est illustrée à la figure 2b. La goutte de glycérol fait un angle Θ avec le plan du film. Au bout de durées variables de réaction, l'angle augmente traduisant l'aspect de plus en plus hydrophobe de la surface du film de polymère ayant en surface des fonctions ester. Alors que l'on enregistre un angle initial de 50°, et un angle de 57° au bout d'un temps très long, cet angle de 57° est pratiquement atteint au bout de 2 heures, ceci est traduit par la figure 2b qui schématise l'avancement de la transformation des fonctions alcool en fonctions ester à la surface.

En conclusion un film mis en contact environ 2 heures en présence d'un gaz de chlorure d'acide présente un grand nombre de fonctions surfaciques ester alors qu'en volume seul 10 % des fonctions sont des fonctions ester. Ceci valide la transformation des fonctions surfaciques (Y) en fonctions (X).

### Exemple 2

Dans une cellule constituée par deux substrats conducteurs transparents (verre ou polyester recouvert d'oxyde d'indium et d'étain), séparés par des cales d'épaisseur 23 µm, on introduit le même mélange que dans l'exemple 1, on irradie de la même façon, et on élimine le cristal liquide sous vide.

On met le réseau en contact avec le mélange suivant pendant 40 minutes :
- 10 mmol de chlorure d'acide para-butyl benzoique ;
- 10 mmol de triéthyl amine ;
- 20 ml d'éther.

Le réseau est ensuite rincé à l'eau, puis à l'éther, séché sous vide et rempli par le cristal liquide BL012.

## Revendications

1. Matériau électrooptique composite à base de polymère (P) et de molécules de cristal liquide (χL) caractérisé en ce qu'il comprend un réseau poreux de polymère, les molécules cristal liquide (χL) étant dans les pores du réseau, le polymère (P) possédant des fonctions réactives (Y) et à l'interface polymère/cristal liquide, des fonctions (X).

2. Matériau électrooptique selon la revendication 1, caractérisé en ce que les fonctions réactives (Y) sont des alcools.

3. Matériau électroooptique selon la revendication 2, caractérisé en ce que les fonctions (X) sont des esters.

4. Matériau électrooptique selon l'une des revendications 1 à 3, caractérisé en ce que le réseau poreux de polymère est un réseau de polymère réticulé.

5. Procédé d'obtention d'un film de matériau électrooptique à base de polymère (P) et de molécules de cristal liquide (χL) caractérisé en ce qu'il comprend les étapes suivantes :
* la réalisation d'un film poreux de polymère, sur un substrat (S), ledit polymère possédant des fonctions réactives (Y);
* la transformation chimique des fonctions réactives (Y) des chaînes de polymère situées à l'interface polymère (P)/pores du réseau, de manière à obtenir un réseau présentant en volume des chaînes de polymère ayant des fonctions (Y) et en surface des chaînes de polymère ayant des fonctions (X) ;
* l'inclusion de molécules cristal liquide (χL) dans les pores du film de polymère.

6. Procédé d'obtention d'un film de matériau électrooptique selon la revendication 5, caractérisé en ce que la porosité du film est assurée par des inclusions de cristal liquide (χL)ₒ dans le polymère, ledit cristal liquide (χL)ₒ étant éliminé avant l'étape de transformation chimique des fonctions réactives surfaciques (Y) en fonctions (X).

7. Procédé d'obtention d'un film de matériau électrooptique selon l'une des revendications 5 ou 6, caractérisé en ce que le film poreux est un film de polymère réticulé.

8. Procédé d'obtention d'un film de matériau électrooptique selon la revendication 7, caractérisé en ce que le polymère réticulé est réalisé :
* à partir d'un mélange (M)ₒ de monomère photopolymérisable, de photoamorceur et de cristal liquide (χL)ₒ ;
* en polymérisant le monomère photopolymérisable ;
* en éliminant le cristal liquide (χL)ₒ.

9. Procédé d'obtention d'un film de matériau électrooptique selon la revendication 8, caractérisé en ce que le mélange (M)ₒ est introduit par capillarité dans une cellule comprenant des électrodes transparentes.

10. Procédé d'obtention d'un film de matériau électrooptique selon la revendication 9, caractérisé en ce que le cristal liquide (χL)ₒ est éliminé, par aspiration sous vide.

11. Procédé d'obtention d'un film de matériau électrooptique selon l'une des revendications 5 à 10, caractérisé en ce que la transformation chimique se fait en présence d'un gaz comportant des fonctions (Z) capables de générer des fonctions (X).

12. Procédé d'obtention d'un film de matériau électrooptique selon l'une des revendications 5 à 11, caractérisé en ce que les fonctions (Y) sont des alcools.

13. Procédé d'obtention d'un film de matériau électrooptique selon la revendication 12, caractérisé en ce que les fonctions (Z) sont des chlorures d'acide.

14. Dispositif électrooptique caractérisé en ce qu'il comprend un film de matériau électrooptique selon l'une des revendications 1 à 4.

15. Ecran de visualisation caractérisé en ce qu'il comprend un film de matériau électrooptique selon l'une des revendications 1 à 4.

## Patentansprüche

1. Elektro-optisches Verbundmaterial auf der Basis eines Polymers (P) und von Flüssigkristallmolekülen (χL), dadurch gekennzeichnet, daß es ein poröses Netz des Polymers enthält, wobei die Flüssigkristallmoleküle (χL) sich in den Poren des Netzes befinden und das Polymer (P) reaktive Funktionen (Y) und an der Grenze zwischen Polymermaterial und Flüssigkristall Funktionen (X) besitzt.

2. Elektro-optisches Material nach Anspruch 1, dadurch gekennzeichnet, daß die reaktiven Funktionen (Y) Alkohole sind.

3. Elektro-optisches Material nach Anspruch 2, dadurch gekennzeichnet, daß die Funktionen (X) Ester sind.

4. Elektro-optisches Material nach einem der Ansprüche 1 bis 3, dadurch gekennzeichnet, daß das poröse Polymernetz ein vernetztes Polymernetz ist.

5. Verfahren zur Bildung einer Schicht aus elektro-optischem Material auf der Basis eines Polymers (P) und von Flüssigkristallmolekülen (χL), dadurch gekennzeichnet, daß es die folgenden Verfahrensschritte aufweist:
* Herstellung einer porösen Schicht des Polymers auf einem Substrat (S), wobei das Polymer reaktive Funktionen (Y) besitzt,
* chemische Transformation der reaktiven Funktionen (Y) der Polymerketten, die an der Grenze zwischen Polymermaterial (P) und den Poren des Netzes liegen, derart, daß im Volumen Polymerketten mit Funktionen (Y) und an der Oberfläche Polymerketten mit Funktionen (X) erhalten werden,
* Einschluß von Flüssigkristallmolekülen (χL) in die Poren der Schicht.

6. Verfahren zur Bildung einer Schicht aus elektro-optischem Material nach Anspruch 5, dadurch gekennzeichnet, daß die Porosität der Schicht durch Einschlüsse von Flüssigkristallen (χL)₀ in das Polymer erhalten wird, wobei die Flüssigkristalle (χL)₀ vor dem Verfahrensschritt der chemischen Umwandlung der reaktiven Funktionen (Y) an der Oberfläche in Funktionen (X) eliminiert werden.

7. Verfahren zur Bildung einer Schicht aus elektro-optischem Material nach einem der Ansprüche 5 und 6, dadurch gekennzeichnet, daß die poröse Schicht eine Schicht aus vernetztem Polymermaterial ist.

8. Verfahren zur Bildung einer Schicht aus elektro-optischem Material nach Anspruch 7, dadurch gekennzeichnet, daß das vernetzte Polymer erhalten wird,
* ausgehend von einer Mischung (M)₀ des polymerisierbaren Monomers, eines Photoauslösers und von Flüssigkristallen (χL)₀,
* durch Polymerisierung des polymerisierbaren Monomers,
* durch Eliminierung der Flüssigkristalle (χL)₀.

9. Verfahren zur Bildung einer Schicht aus elektro-optischem Material nach Anspruch 8, dadurch gekennzeichnet, daß die Mischung (M)₀ durch Kapillarwirkung in eine Zelle eingebracht wird, die transparente Elektroden enthält.

10. Verfahren zur Bildung einer Schicht aus elektro-optischem Material nach Anspruch 9, dadurch gekennzeichnet, daß die Flüssigkristalle (χL)₀ durch Absaugen unter Vakuum eliminiert werden.

11. Verfahren zur Bildung einer Schicht aus elektro-optischem Material nach einem der Ansprüche 5 bis 10, dadurch gekennzeichnet, daß die chemische Transformation in Gegenwart eines Gases erfolgt, das Funktionen (Z) enthält, die Funktionen (X) erzeugen können.

12. Verfahren zur Bildung einer Schicht aus elektro-optischem Material nach einem der Ansprüche 5 bis 11, dadurch gekennzeichnet, daß die Funktionen (Y) Alkohole sind.

13. Verfahren zur Bildung einer Schicht aus elektro-optischem Material nach Anspruch 12, dadurch gekennzeichnet, daß die Funktionen (Z) Säurechloride sind.

14. Elektro-optische Vorrichtung, dadurch gekennzeichnet, daß sie eine Schicht aus elektro-optischem Material nach einem der Ansprüche 1 bis 4 enthält.

15. Bildschirm, dadurch gekennzeichnet, daß er eine Schicht aus elektro-optischem Material nach einem der Ansprüche 1 bis 4 enthält.

## Claims

1. Composite electro-optical material based on a polymer (P) and liquid crystal molecules (χL), characterized in that it comprises a porous polymer network, the liquid crystal molecules (χL) being in the pores of the network, the polymer (P) having reactive functional groups (Y) and the polymer/liquid crystal interface having functional groups (X).

2. Electro-optical material according to Claim 1, characterized in that the reactive functional groups (Y) are alcohols.

3. Electro-optical material according to Claim 2, characterized in that the functional groups (X) are esters.

4. Electro-optical material according to one of Claims 1 to 3, characterized in that the porous polymer network is a cross-linked polymer network.

5. Method of obtaining a film of electro-optical material based on a polymer (P) and liquid crystal molecules (χL), characterized in that it comprises the following steps:
* producing a porous polymer film on a substrate (S), the said polymer having reactive functional groups (Y);
* chemically converting the reactive functional groups (Y) of the polymer chains lying at the interface between the polymer (P) and the pores in the network, so as to obtain a network which, in its bulk, has polymer chains with functional groups (Y), and at its surface has polymer chains with functional groups (X);
* including the liquid crystal molecules (χL) in the pores of the polymer film.

6. Method of obtaining a film of electro-optical material according to Claim 5, characterized in that the film is rendered porous by inclusions of liquid crystal (χL)ₒ in the polymer, the said liquid crystal (χL)ₒ being removed before the step of chemically converting the surface reactive functional groups (Y) into functional groups (X).

7. Method of obtaining a film of electro-optical material according to one of Claims 5 and 6, characterized in that the porous film is a cross-linked polymer film.

8. Method of obtaining a film of electro-optical material according to Claim 7, characterized in that the cross-linked polymer is produced:
* from a mixture (M)ₒ of photopolymerizable monomer, photoinitiator and liquid crystal (χL)ₒ;
* by polymerizing the photopolymerizable monomer;
* by removing the liquid crystal (χL)ₒ.

9. Method of obtaining a film of electro-optical material according to Claim 8, characterized in that the mixture (M)ₒ is introduced by capillary action into a cell comprising transparent electrodes.

10. Method of obtaining a film of electro-optical material according to Claim 9, characterized in that the liquid crystal (χL)ₒ is removed by vacuum pumping.

11. Method of obtaining a film of electro-optical material according to one of Claims 5 to 10, characterized in that the chemical conversion takes place in the presence of a gas which includes functional groups (Z) that can generate functional groups (X).

12. Method of obtaining a film of electro-optical material according to one of Claims 5 to 11, characterized in that the functional groups (Y) are alcohols.

13. Method of obtaining a film of electro-optical material according to Claim 12, characterized in that the functional groups (Z) are acid chlorides.

14. Electro-optical device, characterized in that it comprises a film of electro-optical material according to one of Claims 1 to 4.

15. Display screen characterized in that it comprises a film of electro-optical material according to one of Claims 1 to 4.
